# EUROPÄISCHE PATENTSCHRIFT

(11) **EP 2 563 643 B1**
(45) Veröffentlichungstag und Bekanntmachung des Hinweises auf die Patenterteilung: **03.01.2018**
(21) Anmeldenummer: 11708003.6
(22) Anmeldetag: 09.03.2011
(51) Int. Cl.: B62D 27/02, F16B 11/00

(54) **VERFAHREN ZUM FÜGEN VON BAUTEILEN**
METHOD FOR JOINING COMPONENTS
PROCÉDÉ D'ASSEMBLAGE DE PIÈCES

(30) Priorität: 26.04.2010 DE 102010028171
(43) Veröffentlichungstag der Anmeldung: 06.03.2013
(73) Patentinhaber: Bayerische Motoren Werke Aktiengesellschaft, 80809 München (DE)
(72) Erfinder: GORLT, Peter, 86167 Augsburg (DE); ZAHLAUER, Johann, 85304 Ilmmünster (DE); JOHN, Margit, 81371 München (DE)
(86) Internationale Anmeldenummer: PCT/EP2011/001138
(87) Internationale Veröffentlichungsnummer: WO 2011/134572

(56) Entgegenhaltungen:
- DE-A1-102007 022 137
- DE-A1-102007 028 581
- GB-A- 1 315 373
- US-A- 5 845 387

## Beschreibung

Die Erfindung betrifft ein Verfahren zum Fügen von Bauteilen zu einer Bauteilgruppe, wobei die Bauteile aus einem steifen Material, insbesondere aus Metall, faserverstärktem Kunststoff und/oder Thermoplast, gebildet sind, mit den Schritten wie im Oberbegriff des Anspruchs 1 angegeben (US 5,845,387). Derartige Verfahren, bei denen zwei Bauteile miteinander verklebt werden, sind aus dem Stand der Technik bekannt. Die zu verklebenden Bauteile müssen zunächst zueinander ausgerichtet werden, um eine korrekte Funktion oder Endgestalt der Bauteilgruppe zu erreichen. Anschließend werden durch Aushärten des Klebstoffs, der die einzelnen Bauteile verbindet, diese Bauteile zueinander fixiert. Der Klebstoff, der sich zwischen den zwei Bauteilen befindet, ist während dem Zusammenfügen der Bauteile in einem teigförmigen Zustand. Dabei besteht die Gefahr, dass die zwei Bauteile zueinander verschoben werden können, was dazu führt, dass nach dem Aushärten des Klebstoffs die zwei Bauteile zueinander eine Fehlstellung einnehmen und somit die gesamte Baugruppe unbrauchbar ist.

Zur Überwindung dieses Problems wurden im Stand der Technik Lösungen vorgeschlagen, bei denen zusätzlich zu der Klebeverbindung die zwei Bauteile über eine mechanische Verbindung miteinander verbunden werden. Dabei handelt es sich im Allgemeinen um Schraubverbindungen oder Positionierstifte, welche die Aufgabe haben für die Dauer des Klebevorgangs die Bauteile in einer bestimmten Position zueinander zu fixieren.

Insbesondere beim Verkleben von faserverstärkten Materialien ergibt sich jedoch das Problem, dass identische Teile innerhalb von Toleranzbereichen voneinander abweichen. Im Gegensatz zu Werkstücken aus Blech, die plastisch deformierbar sind, weisen faserverstärkte Kunststoffe eine hohe Rückstellkraft auf. D.h. solche Teile werden im Wesentlichen in elastischen Bereichen deformiert. Während des Fügeprozesses, bei dem ein oder mehrere Bauteile mit einem anderen Teil oder mit mehreren Bauteilen verklebt werden, müssen diese Bauteile unter Krafteinwirkung in einem deformierten Zustand gehalten werden. Die Rückstellkraft führt jedoch dazu, dass nach Rücknahme der Krafteinwirkung das Kunststoffteil in seine Ursprungsform zurückkehrt und dadurch die Klebeverbindung zerstört wird. Folglich ist insbesondere bei faserverstärkten Kunststoffen ein Toleranzausgleich durch Biegen der Bauteile nur in sehr engen Bereichen möglich. Dieses Problem tritt verstärkt auf, wenn eines der zu fügenden Bauteile selbst aus einer Unterbaugruppe besteht. Gleiche Unterbaugruppen weisen untereinander von sich aus unterschiedliche geometrische Abmaße auf, die durch deren vorherigen Zusammenbau bedingt sind, der ebenfalls unter Toleranzabweichungen stattfindet.

Folglich ist eine mechanische Verbindung der Bauteile zusätzlich zur Klebeverbindung beim Kleben von faserverstärkten Bauteilen nicht sinnvoll um die Teile gegeneinander zu fixieren, bis der Klebstoff aushärtet.

Aus der DE 102007028581 A1 ist ein Verfahren zum Fügen von Bauteilen bekannt, bei dem ein Klebstoff auf zumindest eine Fügefläche eines der Bauteile aufgetragen wird und die Bauteile im Bereich der Fügeflächen aneinander gedrückt werden. Dabei wird in Teilbereichen der Fügefläche zur Beschleunigung der Klebstoffaushärtung Wärme eingebracht.

Die DE 102007022137 A1 zeigt ein Verfahren zum Verbinden von Fügeteilen durch Kleben mit folgenden Verfahrensschritten: Auftragen eines Klebstoffes auf mindestens eine Klebefläche an mindestens einem Fügeteil; Zueinanderbringen und Fixieren der Fügeteile in einer gewünschten Fügelage und Ausbilden einer Klebeschicht zwischen den Klebeflächen der Fügeteile und Verfestigen der Klebeschicht, indem in die Klebeschicht partiell Wärme eingebracht wird.

Aus der US 5,845,387 ist eine Fahrzeugkarosserie bekannt, die aus mehreren Bauteilen ausgebildet ist, die miteinander verklebt sind und zueinander einen Abstand aufweisen, so dass sie nicht in direktem Kontakt stehen.

Die vorliegende Erfindung macht es sich zur Aufgabe, ein Verfahren der eingangs genannten Art bereit zu stellen, das die beschriebenen Nachteile des Standes der Technik überwindet.

Die Lösung der Aufgabe erfolgt gemäß einem Verfahren mit den Merkmalen des unabhängigen Anspruchs.

Weitere Ausführungsformen und Weiterbildungen der Erfindungen sind Gegenstand der Unteransprüche.

Ein erfindungsgemäßes Verfahren zum Fügen von Bauteilen zu einer Bauteilgruppe, wobei die Bauteile aus einem steifen Material, insbesondere aus Metall, faserverstärkten Kunststoff und/oder Thermoplast gebildet sind, weist die Schritte auf:
Ausrichtung eines ersten Bauteils in seiner ersten vorbestimmten Position, wobei das erste Bauteil in einem Halteteil aufgenommen ist, Ausrichtung eines zweiten Bauteils in seiner ersten vorbestimmten Position, wobei das zweite Bauteil in einem zweiten Halteteil aufgenommen ist und Auftragen eines Klebstoffs auf vorbestimmte Bereiche des ersten Bauteils und/oder des zweiten Bauteils, und Überführen des zweiten Bauteils in seine zweite vorbestimmte Position, in der das zweite Bauteil einen vorbestimmten Abstand zum ersten Bauteil einnimmt. Weiterhin ist das Verfahren dadurch gekennzeichnet, dass, wenn sich das erste Bauteil in seiner ersten Position befindet und das zweite Bauteil in der zweiten vorbestimmten Position befindet, die Halteteile auf Block gehen, wobei das zweite Bauteil an dem ersten Bauteil derart durch den Klebstoff angeheftet wird, dass eine Relativbewegung der zwei Bauteile zueinander unterbunden wird. Dies bietet den Vorteil, dass bei dem erfindungsgemäßen Fügeverfahren nur eine einzige Verbindung, nämlich durch den Klebstoff zwischen den zwei Bauteilen, erzeugt wird und auf zusätzliche mechanische Verbindungen verzichtet werden kann. Steife Materialien im Sinne der Erfindung sind Thermoplaste, faserverstärkte Kunststoffe wie beispielsweise Kohlefaserverstärkte-Kunststoffe (CFK) oder Glasfaserverstärkte-Kunststoffe (GFK), oder Metalle. Solche Materialien haben eine hohe Rückstellkraft gegenüber von Außen einwirkenden mechanischen Kräften.

Darüber hinaus kann das Verfahren dadurch gekennzeichnet sein, dass in den vorbestimmten Bereichen, in denen der Klebstoff aufgetragen ist, vorbestimmte Heftbereiche vorgesehen sind, wobei zum Anheften des zweiten Bauteils an dem ersten Bauteil in den vorbestimmten Heftbereichen mittels Energiezufuhr, insbesondere mittels Wärmeeinbringung, der Klebstoff zumindest partiell ausgehärtet wird. Dies bietet den Vorteil, dass nur in bestimmten Teilbereichen die Anheftung erfolgt, so dass die Aushärtung des Klebstoffs in den übrigen Bereichen separat in einem späteren Prozessschritt erfolgen kann, wodurch sich die Zeitdauer zum Anheften wesentlich verkürzt. Die vorbestimmten Heftbereiche können sich dabei über die gesamte Länge der vorbestimmten Bereiche erstrecken oder nur in einem Teilbereich der vorbestimmten Bereiche ausgebildet sein.
Zusätzlich oder alternativ können die vorbestimmten Bereiche des ersten Bauteil und/oder des zweiten Bauteils vor dem Fügen vorgeheizt werden. Darüber hinaus kann das Verfahren dadurch gekennzeichnet sein, dass die partielle Aushärtung des Klebstoffs mittels IR-Strahlung (Infrarot-Strahlung) oder Induktion erfolgt. Bei Verwendung von metallischen Bauteilen kann mittels Induktion eines oder beide der zu fügenden Bauteile erwärmt werden, um den Klebstoff auszuhärten.

Weiterhin wird der vorbestimmte Abstand von einer Funktionsfläche des ersten Bauteils zu einer Funktionsfläche des zweiten Bauteils bestimmt, wobei der Toleranzausgleich der Bauteile über die Klebstoffdicke erfolgt.
Zusätzlich oder alternativ, kann der vorbestimmte Abstand von einem vorbestimmten Bereich des ersten Bauteils zu einem vorbestimmten Bereich des zweiten Bauteils bestimmt werden.

Zudem kann das Verfahren dadurch gekennzeichnet sein, dass das Aushärten des Klebstoffs innerhalb eines vorbestimmten Zeitintervalls erfolgt, wobei das Zeitintervall kleiner ist als eine Offenzeit des Klebstoffs. Das Zeitintervall liegt dabei bevorzugt in einem Bereich zwischen 30 Sekunden und 7 Minuten. Besonders bevorzugt wird eine Ausführungsform, in der das Zeitintervall im Wesentlichen 60 Sekunden entspricht.

Zusätzlich kann das Verfahren dadurch gekennzeichnet sein, dass der Klebstoff vollständig aushärtet, nachdem die Baugruppe aus dem Halteteil entfernt wurde. Hieraus ergibt sich der Vorteil, dass zum einen sehr kurze Zeitintervalle zum Anheften des Klebstoffs realisierbar sind und zum anderen, dass nach dem Anheften, die so erstellte Baugruppe ihre vollständige Transportfestigkeit erreicht hat. Dadurch kann unmittelbar nach dem partiellen Aushärten die Baugruppe umpositioniert werden.

Darüber hinaus oder alternativ kann das Verfahren dadurch gekennzeichnet sein, dass die zu fügenden Bauteile vor dem Fügen vorbehandelt werden, wobei die Oberflächen der zu fügenden Bauteile in den vorbestimmten Bereichen aufgeraut wird. Dadurch kann auf besonders einfache Weise die Haftung des Klebstoffs an den Bauteilen und dadurch die Haftung der Bauteile zueinander erhöht werden.

Weiterhin kann das Verfahren dadurch gekennzeichnet sein, dass die zu fügenden Bauteile vor dem Fügen gereinigt werden. Dadurch wird vorteilhafterweise die Gefahr von Verunreinigungen an der Klebestelle reduziert und somit die Stabilität der Klebestelle erhöht.

Weiterhin kann das Verfahren dadurch gekennzeichnet sein, dass der Klebstoff ein Zwei-Komponenten-Klebstoff ist.

Weiterhin kann das Verfahren dadurch gekennzeichnet sein, dass die zu fügenden Bauteile vorgefertigte Unterbaugruppen sind.

Weiterhin kann das Verfahren dadurch gekennzeichnet sein, dass die Ausrichtung des ersten Bauteils in seine erste vorbestimmte Position und das Überführen des zweiten Bauteils in seine zweite Position zeitgleich erfolgt. Dabei kann vor der Ausrichtung des ersten Bauteils in seine erste Position der Klebstoff auf vorbestimmte Bereiche des ersten Bauteils und/oder zweiten Bauteils aufgetragen werden.

Nachfolgend sind bevorzugte Ausführungsbeispiele der Erfindung unter Bezugnahme auf Figuren näher erläutert. Dabei zeigen schematisch, beispielhaft und nicht einschränkend:
- Figur 1: ein zu fügendes erstes Bauteil;
- Figur 2: eine schematische Ansicht einer gemäß dem erfinderischen Verfahren zusammengefügten Bauteilgruppe; und
- Figur 3: den Prozessschritt des Anheftens während dem Fügen der Bauteile.

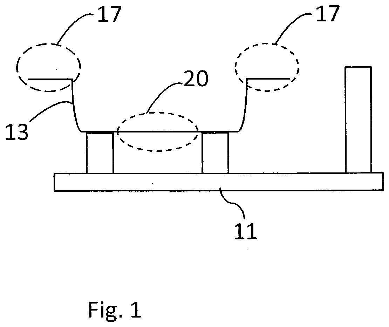

In Figur 1 ist ein erstes Bauteil 13 gezeigt, das in einem Halteteil 11 positioniert ist. Das Halteteil 11 kann eine Aufnahme in Form einer Halterung sein, die ortsfest beispielsweise am Boden einer Werkstatthalle positioniert ist. In einer alternativen Ausführungsform der Erfindung kann das Halteteil 11 jedoch auch ein mobiler Robotergreifarm sein.

Das erste Bauteil 13 weist vorbestimmte Bereiche 17 auf, die in Form von Flanschen dargestellt sind. In diesen Flanschbereichen wird zum Fügen des ersten Bauteils 13, mit einem zweiten Bauteil 14, Klebstoff aufgebracht.

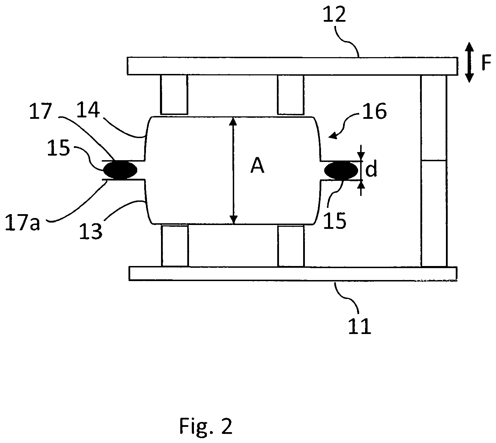

Schematisch ist ein solcher Fügeprozess in Figur 2 dargestellt. Ein zweites Bauteil 14 ist dabei an einem zweiten Halteteil 12 vorgesehen, wobei das zweite Halteteil 12 ebenfalls eine Halterung in Form einer Lehre oder eines mobilen Robotergreifarms sein kann. Das zweite Halteteil 12 kann Relativbewegungen zum ersten Halteteil 11 ausführen, so dass das erste Bauteil 13 und das zweite Bauteil 14 zueinander entsprechend einer gewünschten Position ausgerichtet werden können. Das Halteteil 11 und das Halteteil 12 können dabei auch einzelne Elemente einer übergeordneten Halteeinheit oder einer Fügevorrichtung sein.

Unter Bezugnahme auf die Figuren 1 bis 3 soll im Folgenden das erfindungsgemäße Fügeverfahren beschrieben werden, mit seinen jeweiligen Prozessschritten. Ausgangspunkt des Verfahrens ist die Positionierung eines ersten Bauteils 13 in das erste Halteteil 11, das in Fig. 1 dargestellt ist. In dieser Position ist das erste Bauteil 13 fest in dem ersten Halteteil 11 angeordnet. Anschließend wird in den vorbestimmten Bereichen 17, beispielsweise wie oben genannt in den Flanschbereichen des ersten Bauteils 13, der Klebstoff 15 aufgetragen. Dabei kann wahlweise eine Düse an das erste Bauteil 13 herangeführt werden, so dass aus der Düse Klebstoff 15 auf die vorbestimmten Bereiche 17 aufgetragen wird oder das erste Bauteil 13 an einer Klebstoff spendenden Düse vorbeigeführt werden, zur Aufnahme von Klebstoff 15 in den vorbestimmten Bereichen 17.

Anschließend wird das zweite Bauteil 14 in dem zweiten Halteteil 12, beispielsweise einem Roboterarm, positioniert und aus einer ersten vorbestimmten Position in seine zweite vorbestimmte Position überführt. Die erste vorbestimmte Position des zweiten Bauteils 14 (nicht dargestellt) ist eine Position, in der das Halteteil 12 eine Stellung einnimmt in der das zweite Bauteil 14 besonders leicht in dieses Halteteil 12 einbringbar ist. Die zweite vorbestimmte Position entspricht einer Endposition des zweiten Bauteils 14, die es später in der Baugruppe 16 beibehalten wird wie in Fig. 2 dargestellt. Analog hierzu entspricht die erste vorbestimmte Position des ersten Bauteils 13 einer Endposition dieses Bauteils 13, die es später in der Baugruppe 16 beibehalten wird. Die Baugruppe 16 umfasst dabei zumindest das erste Bauteil 13 und das zweite Bauteil 14.

Das zweite Bauteil 14 wird dabei durch definiertes Anfahren in seine zweite vorbestimmte Position überführt. In dieser Position hält es einen gewünschten, vorbestimmten Abstand A zu dem ersten Bauteil 13. Der gewünschte Abstand A wird dabei von einem funktions- oder formbestimmenden Bereich des ersten Bauteils 13 zu dem zweiten Bauteil 14, bestimmt. Das bedeutet, dass Schwankungen der äußeren Form dieser zwei Bauteile 13,14, die in einem Toleranzbereich liegen, durch den Klebstoff 15 ausgeglichen werden können. Mit anderen Worten, wenn eines der zwei zu fügenden Bauteile nicht absolut maßhaltig geformt wurde, so dass sich beispielsweise der Abstand bzw. die Position eines Funktionsbereichs 20 zu einem Flanschbereich 17 von einem Sollwert abweichen, kann diese Abweichung durch Deformation des Klebstoffs 15 ausgeglichen werden, so dass eine gebildete Baugruppe maßhaltig ist. Der Toleranzausgleich der Bauteile wird dabei über die Klebstoffdicke d bewerkstelligt, d.h. die Bauteile werden soweit aufeinander zu bewegt, bis der Klebstoff 15 seitlich herausquillt. Der Funktionsbereich 20 bzw. der formgebende Bereich, ist ein Bereich des Bauteils, der für die Interaktion der Baugruppe 16 mit anderen Bauteilen oder Baugruppen von wesentlicher Bedeutung ist, beispielsweise für deren Passgenauigkeit oder Maßhaltigkeit.

Beim Fügen dieser Bauteile wird deren Positionierung ausgehend von einem zentralen Bereich (funktions- oder formbestimmender Bereich) bewerkstelligt, d.h. es wird nur auf den Abstand zwischen den zwei zentralen Bereichen des ersten Bauteils 13 und des zweiten Bauteils 14 geachtet. Die Position der Flansche spielt dabei eine untergeordnete Rolle. Beim Fügen der Bauteile 13, 14 quillt der Klebstoff 15 aus der Baugruppe 16 heraus. In Abhängigkeit der Maßhaltigkeit der Bauteilform findet ein stärkeres oder schwächeres Herausquellen statt.

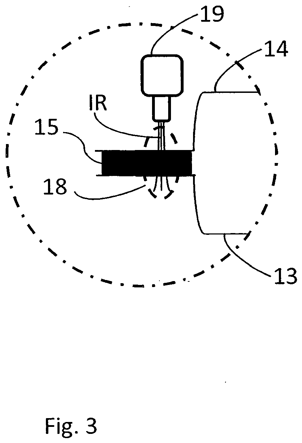

Wenn die zwei Bauteile 13, 14 ihre jeweilige Endlage erreicht haben, die sie zueinander auch später in der Baugruppe 16 beibehalten werden, werden die Bauteile 13, 14 aneinander angeheftet. Dies erfolgt durch punktuelles Aushärten des Klebstoffs 15 mittels Wärmezufuhr in vorbestimmten Heftbereichen 18, wie aus Figur 3 ersichtlich. Hierbei wird eine Wärmequelle an die gefügte Baugruppe herangeführt, die beispielsweise Infrarot-Strahlen aussendet. Die Wärmequelle 19 bestrahlt folglich die Heftbereiche 18 mit Infrarot-Strahlen, so dass in diesem Bereich der Klebstoff 15 aushärtet und dadurch die Bauteile 13, 14 zueinander fixiert sind. Die Beaufschlagung der Heftbereiche 18 mit Wärme erfolgt für eine vorbestimmte Zeit, die kleiner sein muss als die Offenzeit des Klebstoffs. Unter Offenzeit des Klebstoffs ist diejenige Zeitdauer zu verstehen, in der der Klebstoff Hafteigenschaften aufweist. Mit anderen Worten, die Offenzeit ist die Zeitdauer nach deren Verstreichen der Klebstoff seine Hafteigenschaft verliert, so dass kein Haften von Bauteilen an dem Klebstoff bzw. an anderen Bauteilen mehr realisiert werden kann. Die Zeitdauer bzw. das Zeitintervall, in der die Baugruppe 16 bzw. deren Heftbereiche 18, mit Wärme beaufschlagt werden beträgt bevorzugt 50 Sekunden bis 7 Minuten. In einer bevorzugten Ausführungsform des vorliegenden Verfahrens beträgt die Zeitdauer, in der die Baugruppe 16 mit Wärme beaufschlagt wird, 60 Sekunden. Mit anderen Worten, der Prozessschritt des Anheftens der zwei Bauteile zueinander beträgt bevorzugt, im Wesentlichen 60 Sekunden.

Nach dem Prozessschritt des Anheftens ist die Baugruppe 16 stabil, maßhaltig, hat somit ihre Transportfestigkeit erreicht und kann aus dem Halteteil 11, 12 bzw. aus der Fügevorrichtung entfernt werden. Die Erfindung bietet dadurch den Vorteil, dass durch partielles Anheften die Teile formstabil gefügt sind und dadurch nach nur kurzer Verweildauer in der Fügevorrichtung umpositioniert werden können. Die vollständige Aushärtung des Klebstoffs 15 in den nicht ausgehärteten Bereichen erfolgt an der Luft.

In einer weiteren alternativen Ausführungsform der Erfindung werden die vorbestimmten Bereiche 17 vorbehandelt. Dabei werden die Kunststoffteile aus steifem Material abrasiv aufgeraut, um eine bessere Haftung für den Klebstoff bereitzustellen. Die Aufrauhung der faserverstärkten Kunststoffteile erfolgt dabei beispielsweise durch Sandstrahlen, Anschleifen oder durch Lasern. In einer weiteren Alternative des Verfahrens kann die Aktivierung der Oberfläche durch Beflammen erfolgen. Dies ist besonders geeignet wenn die Bauteile 13, 14 aus thermoplastischem Material gebildet sind. Diese vorbestimmten Bereiche 17 können dabei Flanschbereiche oder vorbestimmte Klebeflächen des Bauteils sein.

Nach der Vorbehandlung, in der die zu fügenden Teile aufgeraut wurden, können die Bauteile gereinigt werden, indem selbsttätig mittels eines Roboterarms das Bauteil fett und/oder staubfrei abgewischt wird. Dies kann vorzugsweise durch Abwischen mit einem in Isopropanol getränkten Filz, durch Absprühen oder Bürsten erfolgen.

In einer weiteren, nicht dargestellten Ausführungsform des Verfahrens, können die zu fügenden Bauteile 13, 14 separat jeweils mit Klebstoff 15 bestrichen werden, bevor das Fügen stattfindet. Weiterhin können dabei auch beide Teile jeweils an einem mobilen Greiferarm vorgesehen sein. Beim Fügen der Bauteile erfolgt ein definiertes Anfahren der zu fügenden Bauteile, wobei sowohl das erste Bauteil 13 wie auch das zweite Bauteil 14 sich aufeinander zu bewegen können, bis die Funktionsbereiche 20 einen vorbestimmten Abstand A einnehmen.

In der Haltevorrichtung, die die Halteteile 11, 12 umfasst, werden die Bauteile 13, 14 in den jeweiligen Vorrichtungsteilen festgehalten. Um Spannungen in dem Klebstoff zu vermeiden, werden die zu fügenden Bauteile 13, 14 in allen drei Raumrichtungen gehalten, jedoch nicht gegeneinander verspannt. Die Positionierung der Bauteile 13, 14 im Bereich der Klebespaltebene erfolgt dabei mit größtmöglichem Abstand zum Klebeflansch. Damit der Toleranzausgleich im Klebespalt funktioniert, gehen die Halteteile 11, 12 der Fügevorrichtung auf Block, wenn das erste Bauteil 13 in seiner ersten Position ist und das zweite Bauteil 14 in der zweiten Position ist. Mit anderen Worten, die Fügevorrichtung weist einen Anschlag oder eine Arretierung auf, die ein maximales zueinander Hinbewegen der zu fügenden Bauteile 13, 14 erlaubt. Als Folge dessen erfolgt keine feste Einstellung des Klebespalts auf ein Nennmaß, so dass dieser variieren kann. Das Nennmaß entspricht dem oben beschriebenen Abstand A, und wird zwischen den Funktionsbereichen 17 bestimmt.

In einer weiteren, alternativen Ausführungsform der vorliegenden Erfindung erfolgt das Fügen der Bauteile 13, 14 zu einer Bauteilgruppe 16 unter dem Gesichtspunkt eine möglichst steifigkeitsrelevante Auslegung zu erzielen. Auch bei dieser Ausführungsform wird das zweite Bauteil 14 durch definiertes Anfahren in seine zweite vorbestimmte Position überführt, in der es einen gewünschten, vorbestimmten Abstand d zu dem ersten Bauteil 13 hält. Der gewünschte Abstand wird jedoch nicht von einem funktions- oder formbestimmenden Bereich des ersten Bauteils 13 zu dem zweiten Bauteil 14, bestimmt, sondern von einem vorbestimmten Bereich 17 bzw. Flanschbereich 17 des ersten Bauteils 13 zu einem vorbestimmten Bereich 17a bzw. Flanschbereich 17a des zweiten Bauteils 14, wie in Figur 2 dargestellt. Der vorbestimmte Abstand entspricht in dieser Ausführungsform dem Abstand zwischen den Flanschbereichen 17, 17a und damit im Wesentlichen der Klebespaltdicke d.

Im Folgenden sollen die Vorteile des vorliegenden, erfindungsgemäßen Verfahrens zusammengefasst werden. Durch das Anheften der Bauteile durch lokale Aushärtung wird kein Ofen benötigt, in dem die gesamte Baugruppe 16 mit dem darin befindlichen Klebstoff 15 ausgehärtet werden muss. Die Aushärtung der nicht lokal ausgehärteten Klebstoffbereiche kann energiesparend an der Luft erfolgen. Durch den Verzicht auf zusätzliche mechanische Verbindungen zwischen den zu fügenden Bauteilen können faserverstärkte Kunststoffteile verwendet werden, die in verschiedenen Werkzeugen gefertigt wurden. Dies erlaubt folglich das Multi-Tooling, ohne dass maßliche Qualitätseinbußen bei der Großserienfertigung der Baugruppen 16 zu erwarten sind. In diesem Zusammenhang können auch Mehrfachkavitäten in einem Werkzeug verwendet werden, zur gleichzeitigen Herstellung einer Vielzahl von faserverstärkten Kunststoffteilen. Das erfindungsgemäße Verfahren kann insbesondere im Karosseriebau eingesetzt werden, wo als erstes Bauteil beispielsweise ein Seitenrahmen einer Karosseriestruktur mit einem zweiten Bauteil, beispielsweise einem Dachelement oder einer Bodengruppe, verklebt wird. Die Bodengruppe kann dabei selbst aus einer Vielzahl von Unterbauteilen oder Unterbaugruppen zusammengesetzt sein. Der Energiebedarf des erfindungsgemäßen Verfahrens kann gegenüber handelsüblichem Karosseriebau maßgeblich gesenkt werden. Darüber hinaus ist keine Lackierung einer auf diese Art und Weise hergestellten Karosserie notwendig. Ferner kann durch das erfindungsgemäße Verfahren eine wasserdicht geklebte Karosserie hergestellt werden. Dies ist ein Vorteil gegenüber aus Einzelteilen geschweißten Karosserien, bei denen während des Schweißverfahrens Zugangsöffnungen für die Schweißapparatur vorgehalten werden müssen. Nach dem Fügen müssen diese Zugangsöffnungen beispielsweise mit Polyvinylchlorid (PVC) abgedichtet werden, bevor die Karosserie lackiert wird. Folglich bietet das erfindungsgemäße Verfahren wesentliche Vorteile in puncto Energiereduktion und Umweltverträglichkeit.

## Patentansprüche

1. Verfahren zum Fügen von Bauteilen (13, 14) zu einer Bauteilgruppe (16), wobei die Bauteile (13, 14) aus einem steifen Material, insbesondere aus Metall, faserverstärkten Kunststoff und/oder aus Thermoplast gebildet sind, mit den Schritten:
- Ausrichtung eines ersten Bauteils (13) in einer ersten vorbestimmten Position, wobei das erste Bauteil (13) in einem ersten Halteteil (11) aufgenommen ist,
- Ausrichtung eines zweiten Bauteils (14) in einer ersten vorbestimmten Position, wobei das zweite Bauteil (14) in einem zweiten Halteteil (12) aufgenommen ist,
- Auftragen eines Klebstoffs (15) auf vorbestimmte Bereiche (17) des ersten und/oder zweiten Bauteils (13, 14),
- Überführen des zweiten Bauteils (14) in eine zweite vorbestimmte Position, in der das zweite Bauteil (14) einen vorbestimmten Abstand (A, d) zum ersten Bauteil (13) einnimmt,
**dadurch gekennzeichnet, dass**
- wenn sich das erste Bauteil (13) in seiner ersten Position befindet und das zweite Bauteil (14) in der zweiten vorbestimmten Position befindet, die Halteteile (11, 12) auf Block gehen, wobei das zweite Bauteil (14) an dem ersten Bauteil (13) derart über den Klebstoff (15) angeheftet wird, dass eine Relativbewegung der zwei Bauteile (13, 14) zueinander unterbunden wird, wobei
- der vorbestimmte Abstand (A) von einem Funktionsbereich des ersten Bauteils (13) zu einem Funktionsbereich des zweiten Bauteils (14) bestimmt wird, wobei
- ein Toleranzausgleich der Bauteile (13, 14) über die Klebstoffdicke erfolgt und/oder
- der vorbestimmte Abstand (d) von einem vorbestimmten Bereich (17) des ersten Bauteils (13) zu einem vorbestimmten Bereich (17a) des zweiten Bauteils (14) bestimmt wird.

2. Verfahren nach Anspruch 1, **dadurch gekennzeichnet, dass**
- in den vorbestimmten Bereichen (17), in denen Klebstoff (15) aufgetragen ist, vorbestimmte Heftbereiche (18) vorgesehen sind, wobei
- zum Anheften des zweiten Bauteils (14) an dem ersten Bauteil (13) in den vorbestimmten Heftbereichen (18) mittels Energiezufuhr, insbesondere mittels Wärmeeinbringung, der Klebstoff (15) zumindest partiell ausgehärtet wird, wobei
- das partielle Aushärten des Klebstoffs (15) insbesondere mittels Infrarot-Strahlung oder Induktion erfolgt.

3. Verfahren nach einem der vorhergehenden Ansprüche 1 oder 2, **dadurch gekennzeichnet, dass**
- das Aushärten des Klebstoffs innerhalb eines vorbestimmten Zeitintervalls, das kleiner ist als eine Offenzeit des Klebstoffs, erfolgt, wobei das Zeitintervall bevorzugt im Bereich zwischen 30 Sekunden und 7 Minuten liegt und besonders bevorzugt im Wesentlichen 60 Sekunden entspricht.

4. Verfahren nach einem der vorhergehenden Ansprüche, **dadurch gekennzeichnet, dass**
- der Klebstoff (15) vollständig aushärtet nachdem die Baugruppe (16) aus dem Halteteil (11, 12) entfernt wurde.

5. Verfahren nach einem der vorhergehenden Ansprüche, **dadurch gekennzeichnet, dass**
- die zu fügenden Bauteile (13, 14) vor dem Fügen vorbehandelt werden, wobei deren Oberfläche in den vorbestimmten Bereichen aufgeraut wird.

6. Verfahren nach einem der vorhergehenden Ansprüche, **dadurch gekennzeichnet, dass**
- die zu fügenden Bauteile (13, 14) vor dem Fügen gereinigt werden.

7. Verfahren nach einem der vorhergehenden Ansprüche, **dadurch gekennzeichnet, dass**
- der Klebstoff (15) ein Zwei-Komponenten-Klebstoff ist.

8. Verfahren nach einem der vorgehenden Ansprüche, **dadurch gekennzeichnet, dass**
- die zu fügenden Bauteile (13, 14) vorgefertigte Unterbaugruppen sind.

9. Verfahren nach einem der vorhergehenden Ansprüche, **dadurch gekennzeichnet, dass**
- die Ausrichtung des ersten Bauteils (13) in die erste vorbestimmte Position und das Überführen des zweiten Bauteils (14) in die zweite vorbestimmte Position zeitgleich erfolgt.

## Claims

1. A method for joining components (13, 14) to form a component group (16), wherein the components (13, 14) are formed from a rigid material, especially from metal, fibre-reinforced plastics material and/or from thermoplastic material, having the steps:
- orienting a first component (13) in a first predetermined position, wherein the first component (13) is received in a first holding part (11),
- orienting a second component (14) in a first predetermined position, wherein the second component (14) is received in a second holding part (12),
- applying an adhesive (15) to predetermined regions (17) of the first and/or second component (13, 14),
- transferring the second component (14) into a second predetermined position, in which the second component (14) assumes a predetermined distance (A, d) from the first component (13),
**characterised in that**
- if the first component (13) is in its first position and the second component (14) is in the second predetermined position, the holding parts (11, 12) go into block, with the second component (14) being affixed to the first component (13) via the adhesive (15) such that a movement of the two components (13, 14) relative to each other is prevented, with
- the predetermined distance (A) being determined from a functional region of the first component (13) to a functional region of the second component (14), with
- a tolerance compensation of the components (13, 14) taking place via the thickness of adhesive, and/or
- the predetermined distance (d) being determined from a predetermined region (17) of the first component (13) to a predetermined region (17a) of the second component (14).

2. A method according to Claim 1, **characterised in that**
- predetermined affixing regions (18) are provided in the predetermined regions (17) in which adhesive (15) is applied, with
- for affixing the second component (14) to the first component (13) in the predetermined affixing regions (18) by means of supplying energy, especially by means of the addition of heat, the adhesive (15) being at least partially cured, with
- the partial curing of the adhesive (15) taking place especially by means of infrared radiation or induction.

3. A method according to one of the preceding Claims 1 or 2, **characterised in that**
- the curing of the adhesive takes place within a predetermined time interval which is shorter than an open time of the adhesive, the time interval preferably being in the region between 30 seconds and 7 minutes and especially preferably corresponding to substantially 60 seconds.

4. A method according to one of the preceding claims, **characterised in that**
- the adhesive (15) cures completely once the assembly (16) has been removed from the holding part (11, 12).

5. A method according to one of the preceding claims, **characterised in that**
- the components (13, 14) to be joined are pre-treated prior to joining, the surface thereof being roughened in the predetermined regions.

6. A method according to one of the preceding claims, **characterised in that**
- the components (13, 14) to be joined are cleaned prior to joining.

7. A method according to one of the preceding claims, **characterised in that**
- the adhesive (15) is a two-component adhesive.

8. A method according to one of the preceding claims, **characterised in that**
- the components (13, 14) to be joined are prefabricated subassemblies.

9. A method according to one of the preceding claims, **characterised in that** the orientation of the first component (13) into the first predetermined position and the transferring of the second component (14) into the second predetermined position take place simultaneously.

## Revendications

1. Procédé d'assemblage de pièces (13, 14) de façon à obtenir un groupe de pièces (16), les pièces (13, 14) étant réalisées en un matériau rigide, en particulier en métal, en matériau synthétique renforcé par des fibres et/ou en matériau thermodurcissable, comprenant les étapes suivantes consistant à :
- orienter une première pièce (13) dans une première position prédéfinie, la première pièce (13) étant logée dans une première pièce de maintien (11),
- orienter une seconde pièce (14) dans une première position prédéfinie, la seconde pièce (14) étant logée dans une seconde pièce de maintien (12),
- appliquer un adhésif (15) sur des zones prédéfinies (17) de la première et/ou de la seconde pièce (13, 14),
- transférer la seconde pièce (14) dans une seconde position prédéfinie dans laquelle elle est à une distance prédéfinie (A, d) de la première pièce (13),
**caractérisé en ce que**
lorsque la première pièce (13) est dans sa première position et que la seconde pièce (14) est dans la seconde position prédéfinie, les pièces de maintien (11, 12) passant à l'état de bloc, la seconde pièce (14) étant fixée à la première pièce (13) par l'intermédiaire de l'adhésif (15) de sorte qu'un déplacement des deux pièces (13, 14) l'une par rapport à l'autre soit empêché,
la distance prédéfinie (A) est définie par une zone fonctionnelle de la première pièce (13) par rapport à une zone fonctionnelle de la seconde pièce (14),
une compensation de tolérance des pièces (13, 14) étant effectuée par l'épaisseur de l'adhésif, et/ou
- la distance prédéfinie (d) est définie par une zone prédéfinie (17) de la première pièce (13) par rapport à une zone prédéfinie (17a) de la seconde pièce (14).

2. Procédé conforme à la revendication 1,
**caractérisé en ce que**
- dans les zones prédéfinies (17) dans lesquelles l'adhésif (15) est appliqué, il est prévu des zones de fixation (18) prédéfinies,
- pour fixer la seconde pièce (14) à la première pièce (13) dans les zones de fixation (18) prédéfinies, l'adhésif (15) est au moins partiellement durci par apport énergie, en particulier de chaleur,
- le durcissement partiel de l'adhésif (15) étant en particulier effectué par rayonnement infrarouge ou par induction.

3. Procédé conforme à l'une des revendications précédentes 1 et 2,
**caractérisé en ce que**
- le durcissement de l'adhésif est effectué dans un intervalle de temps prédéfini qui est inférieur au temps d'utilisation de l'adhésif, cet intervalle de temps étant de préférence situé dans la plage comprise entre 30 secondes et 7 minutes, et de façon particulièrement préférentielle correspondant à essentiellement 60 secondes.

4. Procédé conforme à l'une des revendications précédentes,
**caractérisé en ce que**
l'adhésif (15) est totalement durci après que le groupe de pièces (16) ait été extrait de la pièce de maintien (11, 12).

5. Procédé conforme à l'une des revendications précédentes,
**caractérisé en ce que**
- les pièces (13, 14) à assembler sont prétraitées avant l'assemblage, leur surface étant rendue rugueuse dans les zones prédéfinies.

6. Procédé conforme à l'une des revendications précédentes,
**caractérisé en ce que**
les pièces (13, 14) à assembler non nettoyées avant l'assemblage.

7. Procédé conforme à l'une des revendications précédentes,
**caractérisé en ce que**
l'adhésif (15) est un adhésif bi-composant.

8. Procédé conforme à l'une des revendications précédentes,
**caractérisé en ce que**
les pièces (13, 14) à assembler sont des sous ensembles préfabriqués.

9. Procédé conforme à l'une des revendications précédentes,
**caractérisé en ce que**
l'orientation de la première pièce (13) dans la première position prédéfinie et le transfert de la seconde pièce (14) dans la seconde position prédéfinie sont effectués simultanément.
